# EUROPEAN PATENT SPECIFICATION

(11) **EP 0 957 070 B1**
(45) Date of publication and mention of the grant of the patent: **19.06.2002**
(21) Application number: 99302908.1
(22) Date of filing: 14.04.1999
(51) Int. Cl.: C04B 28/14, C04B 28/10

(54) **Gypsum products**
Gipswerkstoffe
Produits en gypse

(30) Priority: 17.04.1998 GB 9808261
(43) Date of publication of application: 17.11.1999
(73) Proprietor: BPB plc, Slough, Buckinghamshire SL1 3UF (GB)
(72) Inventor: Boot, Frank Lyn, Loughborough, Leicestershire LE11 4TQ (GB)
(74) Representative: Marlow, Nicholas Simon

(56) References cited:
- EP-A- 0 409 787
- EP-A- 0 607 073
- DE-A- 3 523 115
- DE-A- 4 031 935
- DE-C- 628 655
- US-A- 3 671 280
- CHEMICAL ABSTRACTS, vol. 95, no. 10, 7 September 1981 (1981-09-07) Columbus, Ohio, US; abstract no. 85237s, E. VERENKOVA, ET AL.: page 265; XP000188938 & SU 802 233 A (ID.)
- CHEMICAL ABSTRACTS, vol. 88, no. 14, 3 April 1978 (1978-04-03) Columbus, Ohio, US; abstract no. 93926m, J. HASHIMOTO, ET AL.: page 275; XP000156336 & JP 52 108426 A (ID.)

## Description

The present invention relates to a set of gypsum products having exposed gypsum surfaces and provides such products with enhanced water repellency or moisture resistance. Prominent among such products are paperless gypsum board, but also included are gypsum boards having liners of paper or other material as one or both faces. In the case of boards having liners in both faces, the gypsum is exposed at the edges. Other gypsum products can also suffer from water absorption.

Moisture resistant or water repellent plasterboard in the United Kingdom must meet the requirements of the British Standard for Gypsum Plasterboard [(BS1230:Part 1:1985)]. Moisture resistant wallboard is required to have a water absorption not greater than 5% expressed as the weight percentage of water absorbed by a 300mm X 300mm board sample immersed in water at 20°C for two hours, and can be used in situations where there is a risk of limited exposure of the board to moisture. Moisture repellent wallboard is required to have a surface water absorption not greater than 160g/m² measured after two hours exposure of the board surface to water at 20°C held in the ring of a Cobb water absorption apparatus, and can be used in situations where there is a risk of limited exposure to moisture on the surface of the board.

To achieve moisture resistance, a hydrophobic additive may be incorporated into the plaster slurry employed in forming the board. The surface water absorption requirement for moisture repellency can be achieved by hard sizing of the lining or facing papers employed.

The desired degree of protection against moisture in moisture resistant plasterboard is more difficult to achieve with board of reduced thickness at a given core density, despite the same area of surface and lower area of exposed core edge. The is because the weight of specimens under test decreases as the thickness is reduced. Similarly, the desired degree of protection becomes more difficult to achieve if the weight of the board is reduced at a given thickness.

Moisture absorbency is a particular problem with paperless gypsum products. As well as tiles and other unlined or cast articles, such products also include paperless board, for example, that described in our patent GB 2 053 779, which discloses a building board comprising a core of set cementitious material, for example, gypsum, and an inorganic fibrous fabric or web embedded in at least one face thereof, wherein the material of the core penetrates the fibrous fabric or web and extends in a continuous film over the outer surface of the respective fabric or web. If such a product is made without a waterproofing additive it has a highly absorbent surface which poses problems in subsequent plastering or decorating. As has already been indicated, lined boards can also suffer from moisture absorption, whether through the exposed face in board lined only in one face or through the edges of board lined in both faces.

In order to reduce the absorbency of the surfaces of board, it is customary to add a hydrophobic agent such as silicone to the plaster slurry employed. When using silicone it has proved impossible to achieve paperless gypsum board of this type which is moisture resistant at all thicknesses. There are several reasons for this, notably that the exposed gypsum surface is inherently much more difficult to make moisture resistant and that it is customary to dry such board at lower temperatures than conventional paper faced gypsum board in order to avoid recalcination of the board surfaces, which results in inadequate curing of the silicone waterproofing agents. Merely increasing the level of silicone addition has not overcome these difficulties.

Potassium sulphate is a setting accelerator for plaster slurries and has the effect of increasing the size of gypsum crystals formed from the slurry and thus decreasing the total surface envelope of the set gypsum crystals. It has been found experimentally that, if potassium sulphate is added to a plaster slurry containing silicone, a substantial improvement in water resistance is observed which bears little relation to the change in crystallography of the gypsum. This effect has proved to be due to the potassium ion, although some salts, especially potassium carbonate and potassium sulphate, produce better results than others. Unfortunately, the improvement in water resistance is accompanied by an unacceptable loss of strength of the set gypsum due to the gypsum crystal habit modification. Additionally, various potassium salts have different effects on setting time, ranging from acceleration through neutral to retardation.

It has now been found, in accordance with this invention, that if potassium salt solutions are introduced absorbed on fumed silica as a carrier into a gypsum plaster slurry, a significant improvement in moisture resistance can be achieved without unacceptable loss of strength of the set gypsum.

A further unexpected discovery is that this result is achieved regardless of any modification of set brought about by the salt addition: where the salts affect the gypsum crystallography and the setting time, one would ordinarily expect a strength loss to occur, Moreover, mixtures of accelerating and retarding potassium salts can be used to achieve a slurry having the same setting time as a control slurry without the potassium additions.

The fumed silica is preferably added in an amount of from 0.05 to 10 weight percent of plaster. The potassium salt or salts are preferably added in an amount from 0.05 to 1.0 weight percent plaster. The silicone, which may for example be a methyl hydrogen polysiloxane, may be used in an amount from 0.01 to 2.0 weight percent of plaster and preferably 0.3 to 1.0%. Examples of commercially available silicones are Wacker Chemie's BS 94 fluid and Rhone Poulenc's H68 fluid.

Preferably, the potassium salt is potassium carbonate or potassium sulphate or a mixture thereof, preferably in the weight proportion of 1:1 to 3:1 of the sulphate to the carbonate.

Further unexpected observations suggest that, although fumed silica is known as a strengthening additive for cement, the presence of fumed silica is not the reason for the maintenance of strength when fumed silica and absorbed salt solutions are added to the plaster slurry used in the production of gypsum boards and other cast gypsum products.

Furthermore, it has been observed that, while the presence of fumed silica alone promotes some improvement in the moisture resistance of gypsum board containing silicone, it is the additional presence of potassium salts which is crucial to the development of high levels of water resistance with maintenance of compressive strength of the set gypsum.

These observations are illustrated by, and the effects of various additions on setting time, compressive strength and moisture absorption of paperless gypsum boards are shown in, the following Table I. The superior results achieved by this invention are shown in Tests 5, 6 and 7.

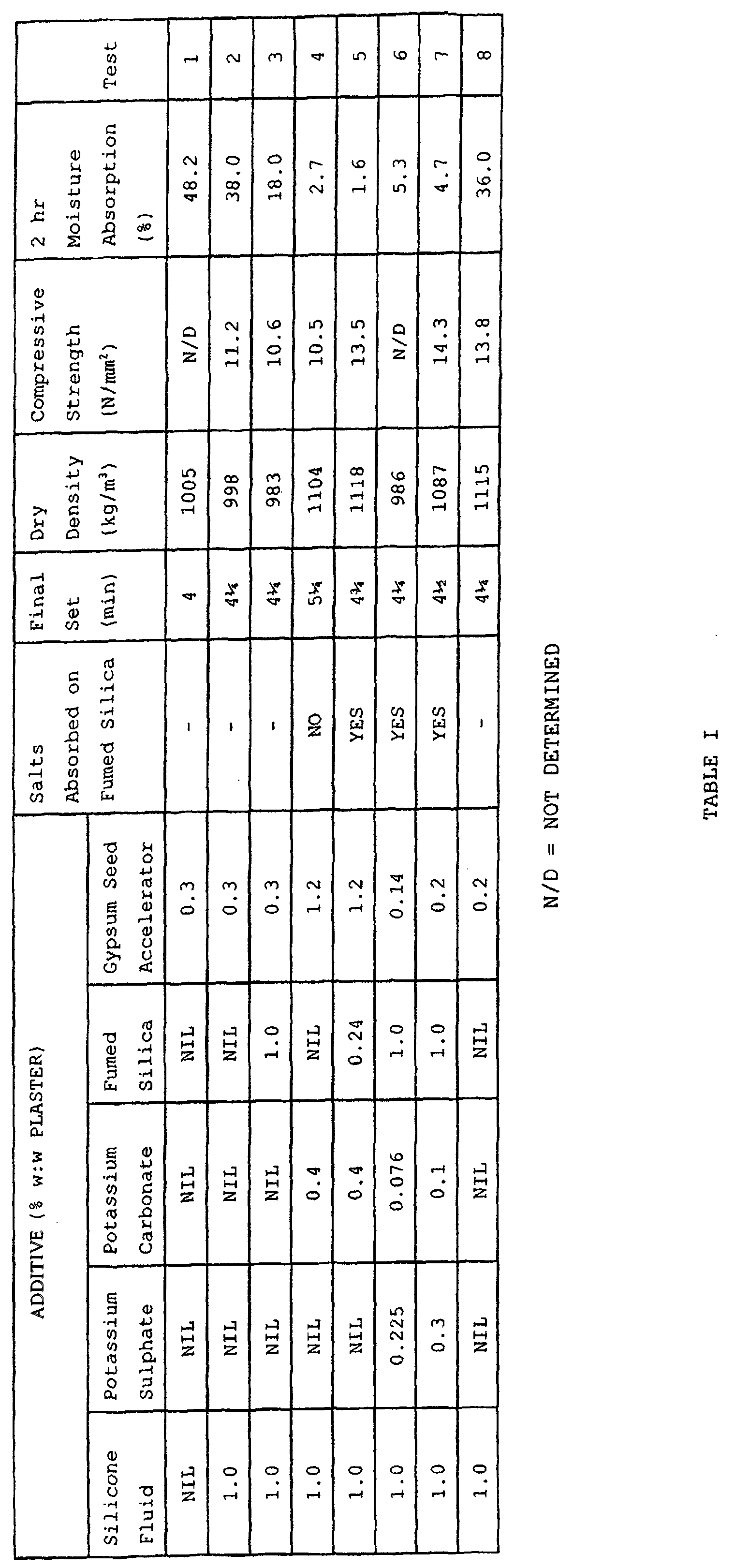

The application of the invention to a product other than paperless board is illustrated by the following example.

Gypsum tiles of 6mm thickness were cast from a slurry of gypsum plaster and dried at 40°C in low humidity. Similar tiles were cast with hydrophobic silicone incorporated in the slurry and others with silicone together with potassium salt solutions absorbed on fumed silica at levels calculated as weight percent of plaster.

The density and absorption values of the tiles are shown in Table II. It will be seen that, although silicone alone causes some reduction in moisture absorption, the combination of silicone, potassium salt and fumed silica brings about a much more striking reduction.

**TABLE II**

| ADDITIVE | ABSORPTION (%) | DENSITY (KG/m³) |
|---|---|---|
| NIL (CONTROL) | 40.0 | 1043 |
| 0.5% silicone | 26.7 | 1052 |
| 0.5% silicone + | 12.5 | 1035 |
| 1.33% fumed silica + | | |
| 0.3% potassium sulphate + | | |
| 0.1% potassium carbonate + | | |
| 1.6% water | | |

## Claims

1. A gypsum product formed of set gypsum plaster slurry and having an exposed gypsum surface in which the moisture resistance of the gypsum surface is enhanced by the inclusion in the gypsum of a hydrophobic silicone and at least one potassium salt together with fumed silica.

2. A product according to claim 1 in which the potassium salt or salts are present in an amount from 0.05 to 1.0 weight percent of the plaster.

3. A product according to claim 1 or 2 in which the fumed silica is present in an amount of from 0.05 to 10 weight percent of the plaster.

4. A product according to claim 1, 2 or 3 in which the silicone is present in an amount from 0.01 to 2.0 weight percent of the plaster.

5. A product according to any preceding claim in which the product is in the form of paperless gypsum board.

6. A product according to any of claims 1 to 4 in which the product is a gypsum board lined in at least one face, for example with a paper liner.

7. A product according to claim 6 lined in both faces with for example a paper liner.

8. A product according to any of claims 1 to 7 which is a gypsum tile.

9. A product according to claim 5, 6, 7 or 8 in which the potassium salt is potassium carbonate or potassium sulphate or a mixture thereof, preferably in the weight proportion of 1:1 to 3:1 of the sulphate to the carbonate.

10. A product according to any preceding claim in which the said at least one potassium salt is absorbed onto the said fumed silica.

11. A process for making a set gypsum product from a plaster slurry in which a hydrophobic silicone is added to the slurry as well as a potassium salt solution absorbed into fumed silica.

12. A process according to claim 11 in which silicone, potassium salt or salts and fumed silica are employed in any of the percentage amounts defined in any of claims 2 to 4.

13. A process according to claim 11 or 12 in which the said at least one potassium salt is absorbed onto the said fumed silica.

## Patentansprüche

1. Gipsprodukt, das aus erstarrtem Gipsputzschlamm geformt ist und eine frei liegende Gipsfläche hat, wobei die Feuchtigkeitsbeständigkeit der Gipsfläche durch den Einschluss eines hydrophoben Silikons und wenigstens eines Kaliumsalzes zusammen mit abgerauchter Silika in den Gips verbessert wird.

2. Produkt nach Anspruch 1, wobei das/die Kaliumsalz(e) in einer Menge zwischen 0,05 bis 1,0 Gew.-% des Gipsputzes vorliegt/vorliegen.

3. Produkt nach Anspruch 1 oder 2, wobei die abgerauchte Silika in einer Menge zwischen 0,05 und 10 Gew.-% des Gipsputzes vorliegt.

4. Produkt nach Anspruch 1, 2 oder 3, wobei das Silikon in einer Menge zwischen 0,01 bis 2,0 Gew.-% des Gipsputzes vorliegt.

5. Produkt nach einem der vorherigen Ansprüche, wobei das Produkt die Form einer papierfreien Gipskartonplatte hat.

6. Produkt nach einem der Ansprüche 1 bis 4, wobei das Produkt eine Gipskartonplatte ist, die wenigstens auf einer Seite beispielsweise mit Kaschierpapier überzogen ist.

7. Produkt nach Anspruch 6, das auf beiden Seiten beispielsweise mit Kaschierpapier überzogen ist.

8. Produkt nach einem der Ansprüche 1 bis 7, das eine Gipsplatte ist.

9. Produkt nach Anspruch 5, 6, 7 oder 8, wobei das Kaliumsalz Kaliumcarbonat oder Kaliumsulfat oder ein Gemisch davon ist, vorzugsweise in einem Sulfat-/Carbonat-Gewichtsverhältnis von 1:1 bis 3:1.

10. Produkt nach einem der vorherigen Ansprüche, wobei das genannte wenigstens eine Kaliumsalz auf der genannten abgerauchten Silika absorbiert ist.

11. Verfahren zum Herstellen eines erstarrten Gipsproduktes aus einem Gipsputzschlamm, wobei ein hydrophobes Silikon sowie eine in abgerauchter Silika absorbierte Kaliumsalzlösung in den Schlamm gegeben werden.

12. Verfahren nach Anspruch 11, wobei Silikon, Kaliumsalz oder -salze und abgerauchte Silika in einer der prozentualen Mengen verwendet werden, die in einem der Ansprüche 2 bis 4 definiert sind.

13. Verfahren nach Anspruch 11 oder 12, wobei das genannte wenigstens eine Kaliumsalz auf die genannte abgerauchte Silika absorbiert wird.

## Revendications

1. Produit en gypse formé d'une pâte prise de plâtre de gypse et ayant une surface de gypse exposée dans laquelle la résistance à l'humidité de la surface de gypse est améliorée par l'inclusion dans le gypse, d'une silicone hydrophobe et d'au moins un sel de potassium avec de la silice fumée.

2. Produit selon la revendication 1 dans lequel le sel ou les sels de potassium sont présents en une quantité de 0,05 à 1,0 pour cent en poids du plâtre.

3. Produit selon la revendication 1 ou 2 dans lequel la silice fumée est présente en une quantité de 0,05 à 10 pour cent en poids du plâtre.

4. Produit selon la revendication 1, 2 ou 3 dans lequel la silicone est présente en une quantité de 0,01 à 2,0 pour cent en poids du plâtre.

5. Produit selon l'une quelconque des revendications précédentes dans lequel le produit est sous forme d'une planche de gypse sans papier.

6. Produit selon l'une quelconque des revendications 1 à 4 dans lequel le produit est une planche de gypse revêtue sur une face au moins, par exemple, d'un revêtement en papier.

7. Produit selon la revendication 6 revêtu sur les deux faces, par exemple, d'un revêtement en papier.

8. Produit selon l'une quelconque des revendications 1 à 7 qui est un carreau de gypse.

9. Produit selon la revendication 5, 6, 7 ou 8 dans lequel le sel de potassium est du carbonate de potassium ou du sulfate de potassium ou un mélange de ceux-ci, de préférence selon la proportion pondérale de 1:1 à 3:1 du sulfate au carbonate.

10. Produit selon l'une quelconque des revendications précédentes dans lequel ledit au moins un sel de potassium est absorbé sur ladite silice fumée.

11. Procédé pour fabriquer un produit pris en gypse avec une pâte de plâtre dans lequel une silicone hydrophobe est ajoutée à la pâte ainsi qu'une solution de sel de potassium absorbée dans de la silice fumée.

12. Procédé selon la revendication 11 dans lequel de la silicone, du sel ou des sels de potassium et de la silice fumée sont utilisés selon l'une quelconque des quantités en pourcentage définies dans l'une quelconque des revendications 2 à 4.

13. Procédé selon la revendication 11 ou 12 dans lequel ledit au moins un sel de potassium est absorbé sur ladite silice fumée.
